# EUROPEAN PATENT SPECIFICATION

(11) **EP 3 241 080 B1**
(45) Date of publication and mention of the grant of the patent: **15.04.2020**
(21) Application number: 14835478.0
(22) Date of filing: 31.12.2014
(51) Int. Cl.: G05B 19/042, A01G 25/16

(54) **CONTROLLING WATER INSTALLATION DEVICES**
STEUERUNG VON WASSERINSTALLATIONSVORRICHTUNGEN
CONTRÔLE DE DISPOSITIFS D'INSTALLATION D'EAU

(43) Date of publication of application: 08.11.2017
(73) Proprietor: FLUIDRA, S.A., 08208 Sabadell (ES)
(72) Inventor: GIMÉNEZ PALLARÈS, David, 08208 Sabadell (ES); PENELO ARIAS, Òscar, 08232 Viladecavalls (ES); MELENDO CASADO, Domènec, 08232 Viladecavalls (ES); BUJALANCE COLL, Daniel, 08232 Viladecavalls (ES)
(74) Representative: ZBM Patents - Zea, Barlocci & Markvardsen
(86) International application number: PCT/EP2014/079497
(87) International publication number: WO 2016/107658

(56) References cited:
- US-A1- 2006 025 875
- US-A1- 2009 216 345
- US-A1- 2014 058 537
- US-B1- 8 649 909

## Description

### FIELD OF THE INVENTION

The present disclosure relates to methods of creating a controller module configured to be used by a water installation controlling apparatus to control a water installation device, and to systems, computing systems and computer programs suitable for carrying out said methods.

The present disclosure further relates to methods of controlling a water installation device by a water installation controlling apparatus, and to systems, computing systems and computer program products suitable for carrying out the above methods of creating a controller module.

### BACKGROUND

Water installations, such as swimming pools, artificial spas, fish farms or the like, require that a number of their parameters are controlled at any given time. For example, in the case of swimming pools, the temperature, the quality, or the quantity of water needs to be monitored and controlled as well as, e.g. the lighting of the pool (internal lighting) or its surrounding.

Typically, these parameters are controlled by separate control devices (or water installation devices) that are arranged with the water installation.

Examples of water installation devices are thermostats, pumps, water purification equipment etc. Each water installation device typically has its own control panel which is arranged with the device. In this case, a user needs to be at the vicinity of the water installation in order to control the device or parameters that affect the functioning of the water installation.

In some cases, the water installation devices may be connectable to communication networks, such as e.g. the Internet. The control panel of a particular water installation device may then be remotely controlled by a user via e.g. a Wi-Fi connection.

A centralized control of water installation devices in a water installation can be desirable in order to facilitate and make the control of the water installation devices more efficient. However, this approach may not be implementable, at least in an obvious manner, because at least some of the water installation devices (to be controlled) may have heterogeneous configurations that may significantly complicate the implementation of a control protocol between them.

A fault tolerating remote control managing device is known from US 2009/0216345 A1.

For example, a water installation may comprise water installation devices without any electronics that can be programmed for implementing a suitable control protocol between water installation devices.

There is a need for new methods, systems and computer programs for water installation devices at least partially solving the aforementioned problems.

### SUMMARY

In a first aspect, a method is provided of creating a controller module configured to be used by a water installation controlling apparatus to control a water installation device which is associable (e.g. connectable) with the water installation controlling apparatus and which is not compatible with a control protocol used by the water installation controlling apparatus.

The water installation device may be associable with the water installation controlling apparatus through e.g. a physical connection (e.g. via a cable), or a wireless connection, or a combination of both, etc.

The control protocol non-compatible water installation device may be either a physical module, such as e.g. lighting device, or a software module, such as e.g. a remote application, a web service, etc.

The method comprises obtaining, by the water installation controlling apparatus, from a user input, at least a predefined type of the water installation device. The user input may be obtained through any known data entry technology/method, such as e.g. by using a keyboard, a mouse, a touch screen, etc.

The method further comprises obtaining, by the water installation controlling apparatus, from a repository of control instructions, a set of control instructions associated with the predefined type.

The set of control instructions comprises one or more output control instructions configured to be called, by the water installation controlling apparatus, according to the control protocol, and to be executed for operating the water installation device as required by the control protocol.

The method still further comprises creating, by the water installation controlling apparatus, the controller module and including, by the water installation controlling apparatus, the set of control instructions in the controller module.

The controller module can thus be understood as a piece of software acting as an interpreter between the water installation controlling apparatus and the water installation device to be controlled.

For example, the control protocol may comprise activating/deactivating a device by calling a corresponding ON/OFF instruction which is correctly resolved or implemented in the water installation controlling apparatus for water installation devices that are compatible with (or support) the control protocol.

In some examples, the water installation device may be a non-programmable device, such that it cannot be programmed for making it compatible with the control protocol. The device may be non-programmable merely because e.g. it does not comprise any electronics configured to be programmed.

In the case of e.g. a lighting device without electronics that can be programmed to support the control protocol, a controller module associated with this particular device may be created having a particular ON/OFF instruction. This particular ON/OFF instruction may be defined so as to be called according to the control protocol to cause its execution, which may provoke an exclusive effect for the lighting device. Said effect may comprise e.g. sending an ON/OFF signal to a switch such that electricity supply is enabled (ON) or interrupted (OFF).

Hence, an aspect of the proposed creating method may be that a water installation device which is not compatible with the control protocol may be controlled by the water installation controlling apparatus as if it was a compatible water installation device.

In some examples, the creating method may further comprise obtaining, by the water installation controlling apparatus, from the user input, an identifier of the water installation device, and including, by the water installation controlling apparatus, the identifier of the water installation device in the controller module.

The identifier of the water installation device may be e.g. a name that uniquely identifies the water installation device. With such an identifier, the water installation controlling apparatus may identify the device among a plurality of other devices and, therefore, may control it by using its associated controller module once identified. A large number of water installation devices may therefore be controlled in a centralized manner by the water installation controlling apparatus.

According to some examples, the creating method may further comprise obtaining, by the water installation controlling apparatus, from the user input, a pointer pointing at a first intermediary module, and said pointer may be included, by the water installation controlling apparatus, in the controller module. The first intermediary module may act as a bridge through which the water installation device may be operated by the execution of the output control instructions.

The first intermediary module may be compatible with the control protocol, in which case the first intermediary module may be "normally" controlled by the water installation controlling apparatus according to the control protocol.

Alternatively, the first intermediary module may not be compatible with the control protocol, in which case the first intermediary module may be controlled by the water installation controlling apparatus by using a controller module associated with the first intermediary module.

The first intermediary module may be either a physical or a software intermediary module. In the case of e.g. a lighting device, the first intermediary module may be a switch or similar device configured to enable or interrupt power supply to the lighting device. In the case of e.g. a remote application, the first intermediary module may be an API configured to call the remote application.

In some examples, the set of control instructions may further comprise one or more input control instructions configured to be called by the water installation controlling apparatus, according to the control protocol, and to be executed for receiving a response from the non-compatible water installation device and to transform the received response according to the control protocol.

Some control protocol non-compatible water installation devices may generate a response to be received by the water installation controlling apparatus. This response may be captured by the controller module and transformed (or formatted) according to the control protocol in such a way that the water installation controlling apparatus may "understand" the content of the response.

For example, in the case of a call to a remote application (e.g. a weather data provider) requesting the temperature at a given location, said application may generate a response including the requested temperature. This response may then be received by the controller module and formatted according to the control protocol, such that it may be processed by the water installation controlling apparatus according to the control protocol.

According to examples, the creating method may further comprise obtaining, by the water installation controlling apparatus, from the user input, a pointer pointing at a second intermediary module, and said pointer may be included, by the water installation controlling apparatus, in the controller module. The second intermediary module may act as a bridge through which the response from the water installation device is to be received.

As commented with respect to the first intermediary module, the second intermediary module may accordingly be either compatible or not compatible with the control protocol supported by the water installation controlling apparatus.

The second intermediary module may be a physical intermediary module. For example, a water flow detector associated with a water pump can generate an electrical current depending on whether there is or not a water flow caused by the water pump. Existence of electrical current may indicate existence of water flow, and absence of electrical current may indicate absence of water flow. In this example, the second intermediary module may be configured to receive said electrical current and generate a suitable signal which may be received by the controller module and formatted according to the control protocol.

Alternatively, the second intermediary module may be a software intermediary module. For example, in the case of a response from a remote application, the second intermediary module may be an API. Then, the response received through the API may be captured by the controller module and formatted according to the control protocol to make it processable by the water installation controlling device according to the control protocol.

The first intermediary module and the second intermediary module may be the same intermediary module, which may comprise both input and output port(s). This way, a control protocol non-compatible water installation device may receive control signal(s) and send corresponding response(s) through input and output port(s) of the same intermediary module. The remote application of the above example may be called and its response received through the same API.

In some examples, the one or more output control instructions may comprise one or more first trigger instructions configured to cause activation or deactivation of the control protocol non-compatible water installation device depending on a received response of another control protocol non-compatible water installation device.

With such a first trigger instructions, different inter-relations between control protocol non-compatible water installation devices may be controlled. For example, if a response is received from a control protocol non-compatible light sensor indicating absence of natural light, a control protocol non-compatible lighting device may be activated.

According to some examples, the one or more output control instructions may comprise one or more second trigger instructions configured to cause activation or deactivation of the control protocol non-compatible water installation device depending on a status of a control protocol compatible water installation device.

With such a second trigger instructions, different inter-relations between non-compatible and compatible water installation devices may be controlled. For example, if the water installation controlling apparatus determines that a compatible rain sensor indicates that it is not raining at a given time of the day, a non-compatible irrigation device may be activated.

In the above example, the water installation controlling apparatus may determine that the compatible rain sensor indicates absence of rain by e.g. inspecting a control register of the compatible rain sensor. No further details about the operation of control protocol compatible water installation devices are provided herein because it is not an object of the present disclosure.

In another aspect, a first system is disclosed. This first system may comprise computing/electronic means for performing a method of creating a controller module according to any of the examples disclosed herein.

According to some examples, a water installation controlling apparatus may be provided comprising a system such as e.g. the above mentioned first system.

In yet another aspect, a first computing system is disclosed. This first computing system may comprise a memory and a processor. The memory may store computer program instructions executable by the processor. Said instructions may comprise functionality to execute a method of creating a controller module according to any of the examples disclosed herein.

In some examples, a water installation controlling apparatus may be provided comprising a computing system such as e.g. the above mentioned first computing system.

In a further aspect, a first computer program product is disclosed. This first computer program product may comprise instructions to provoke that a computing system (such as e.g. the above mentioned first computing system) performs a method of creating a controller module according to any of the examples disclosed herein.

In a still further aspect, a method is provided of controlling a water installation device by a water installation controlling apparatus. The method comprises controlling the water installation device by the water installation controlling apparatus by using a controller module created by performing a method of creating a controller module according to any of the examples disclosed herein.

In a yet further aspect, a second system is disclosed. This second system may comprise computing/electronic means for performing a method of controlling a water installation device according to any of the examples disclosed herein.

According to some examples, a water installation controlling apparatus may be provided comprising a system such as e.g. the above mentioned second system.

In an additional aspect, a second computing system is disclosed. This second computing system may comprise a memory and a processor. The memory may store computer program instructions executable by the processor. Said instructions may comprise functionality to execute a method of controlling a water installation device according to any of the examples disclosed herein.

In some examples, a water installation controlling apparatus may be provided comprising a computing system such as e.g. the above second computing system.

In a still additional aspect, a second computer program product is disclosed. This second computer program product may comprise instructions to provoke that a computing system (such as e.g. the above mentioned second computing system) performs a method of controlling a water installation device according to any of the examples disclosed herein.

Any of the computer program products disclosed herein may be embodied on a storage medium (for example, a CD-ROM, a DVD, a USB drive, on a computer memory or on a read-only memory) or carried on a carrier signal (for example, on an electrical or optical carrier signal).

Any of the computer program products may be in the form of source code, object code, a code intermediate source and object code such as in partially compiled form, or in any other form suitable for use in the implementation of the processes. The carrier may be any entity or device capable of carrying the computer program.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When any of the computer programs is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

### BRIEF DESCRIPTION OF DRAWINGS

Non-limiting examples of the present disclosure will be described in the following, with reference to the appended drawings, in which:
Figure 1 illustrates a block diagram of a water installation controlling apparatus configured to create a controller module according to an example.
Figure 2 illustrates a block diagram of a water installation system comprising a water installation controlling apparatus similar to the one shown in Figure 1.

### DESCRIPTION

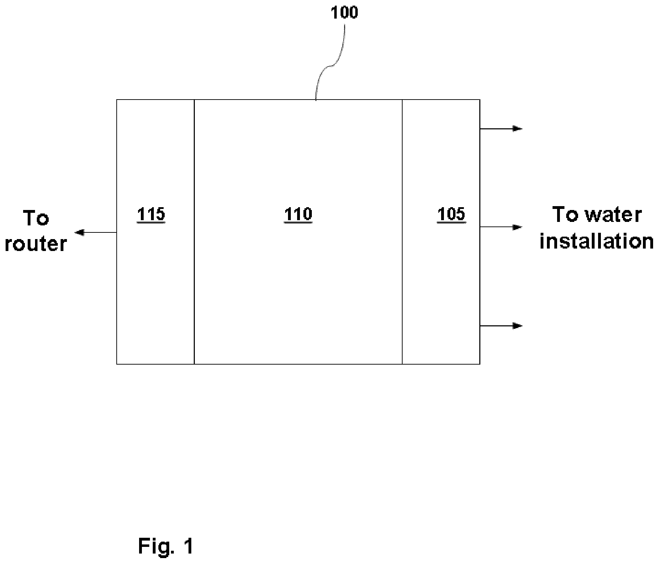

Figure 1 illustrates a block diagram of a water installation controlling apparatus according to an example. The water installation controlling apparatus 100 may comprise an interface module 105, a network access module 110 and an apparatus tunneling module 115. The interface module 105 may be connectable to one or more water installation devices such as water pumps, water temperature controllers, thermostats, lighting installations or the like. Part of the water installation devices may be compatible with the control protocol used by the water installation controlling apparatus 100, and part of the water installation devices may be non-compatible with the control protocol.

The interface module 105 may be configured to be physically connected to the water installation devices via a cable or it may be wirelessly connected to a wireless module of the water installation devices. The water installation may be a simple water container. Various devices may be used to control aspects of the water installation such as water temperature, lighting, water quantity, water quality etc.

Therefore, a user needs not access each of these devices individually, but may access them remotely through a single controlling apparatus 100. For that purpose, the network access module 110 may be configured to be connected to a network access point such as a router. The router may be available in the vicinity of the water installation, e.g. in a building housing or being next to the water installation, and may be connected to a communication network such as the Internet.

The apparatus tunneling module 115 may then be configured to establish a secure socket layer (SSL) tunnel with a remote server through the network access point. For that purpose, the remote server may also be connected to the communication network. The water installation controlling apparatus 100 may be configured to receive controlling instructions from the remote server and through the SSL tunnel to control the water installation or the devices connected to the water installation.

The water installation controlling apparatus 100 may further comprise a data entry module (not shown) and a creator module (not shown). The creator module may be configured to create a controller module for each of the non-compatible water installation devices. The creator module may be configured to obtain control data for creating the controller modules. Said control data may be provided by a user through the data entry module, and may include a name and a predefined type of the non-compatible device, and a pointer pointing at a first intermediary module.

The name may uniquely identify the device, such that the controlling apparatus may unambiguously differentiate said device from the other water installation devices. A set of control instructions associated with the predefined type may also be obtained by the controlling apparatus from a repository of control instructions. Said repository may be e.g. a database (DB) or a descriptor file associated with the predefined type of the non-compatible water installation device.

The control instructions may comprise one or more output control instructions configured to be called according to the control protocol used by the water installation controlling apparatus. The call (by the controlling apparatus 100) of the output control instructions may cause their execution with a particular effect depending on the type of the non-compatible device.

A descriptor file for a predefined type of water installation device may be defined as a piece of software based on a code in the form of control instructions, which may be written e.g. under a textual data format (i.e. a human-readable and machine-readable format). These control instructions may be seen together as a descriptor of (i.e. as describing) how this type of device has to be controlled by the water installation controlling apparatus.

The first intermediary module may be a compatible device through which the aforementioned particular effect is caused on the non-compatible device as a result of the execution of the output control instructions. The first intermediary module may comprise one or more output ports through which signals can be provided to non-compatible devices to generate corresponding particular effects on the non-compatible devices.

Once the control instructions have been obtained, the creator module may create the controller module including the name and type of the non-compatible device, the pointer pointing at the first intermediary module, and the control instructions. The pointer may point at the first intermediary module as a whole or to a particular output port of the first intermediary module. Once created, the controller module may be stored in the interface module 105.

In a non-compatible ON/OFF device, the aforementioned particular effect may comprise e.g. sending an ON/OFF signal to the first intermediary module (which can be a switch or similar), such that electricity supply to the device is enabled (ON) or interrupted (OFF). An example of this type of device can be a lighting device which can only be activated and deactivated.

In a control protocol non-compatible adjustable device, the aforementioned particular effect may comprise e.g. sending a variation signal (representing e.g. a percentage of intensity variation) to the first intermediary module (which may be a potentiometer or similar), such that electricity supply is varied according to the indicated variation. An example of this type of device may be a lighting device in which the intensity of the emitted light is adjustable.

Some non-compatible devices may generate a response to be processed by the water installation controlling apparatus. For example, any kind of sensors may generate a response in the form of a sensed measurement. A rain sensor may generate a response indicating whether it is raining or not, a light sensor may generate a response indicating presence or absence of light, a water flow detector may generate a response indicating presence or absence of water flow caused by e.g. a water pump, etc.

The control instructions of the controller module may comprise one or more input control instructions configured to receive a response from a non-compatible module and to transform (or format) it according to the control protocol. With such a formatting, the received response may be "normally" processed by the water installation controlling apparatus according to the control protocol.

A second intermediary module may be arranged between the controller module and the non-compatible module in such a way that any response from the non-compatible device may be received by the controller module through said second intermediary module. The second intermediary module may comprise one or more input ports. The controller module may comprise a pointer pointing at the second intermediary module as a whole or at one of the input ports of the second intermediary module.

With such a pointer, the controller module may know from where a response from a particular non-compatible module is to be received. This way, corresponding input control instructions of the controller module may capture the response and format it according to the control protocol, so that the water installation controlling apparatus may process the formatted response according to the control protocol.

In the case of a non-compatible physical module, such as e.g. a light sensor for sensing environmental light, an electrical signal may be transmitted from the sensor through the second intermediary module depending on the sensed light. Presence of electrical signal may be interpreted by the input control instructions as presence of environmental light, whereas absence of electrical signal may be interpreted as absence of environmental light.

In the case of a non-compatible software module, such as e.g. a remote application, the second intermediary module may be an API through which data from the remote application may be received. Once the data from the remote application has been captured by the input control instructions of the controller module, the received data may be formatted by the input control instructions according to the control protocol.

In some examples, the output control instructions may comprise trigger instructions configured to cause activation/deactivation of the corresponding non-compatible device either depending on a received response from another non-compatible device or depending on the status of a compatible device. Said activation/deactivation of the non-compatible device may be implemented in the same or similar way as the ON/OFF output control instructions described in other parts of the description.

The trigger instructions may be very suitable for implementing cause-effect relationships between a non-compatible device and either another non-compatible device or a compatible device. For example, a non-compatible water heater may be activated (through ON/OFF instructions) if a response is received from a non-compatible temperature sensor indicating that water temperature is below a given threshold. For example, one or more non-compatible electro-valves of an irrigation system may be deactivated if the status of a compatible rain sensor indicates that it is raining. The status of the compatible rain sensor may be obtained by the water installation controlling apparatus by e.g. inspecting a particular control register of the rain sensor according to the control protocol.

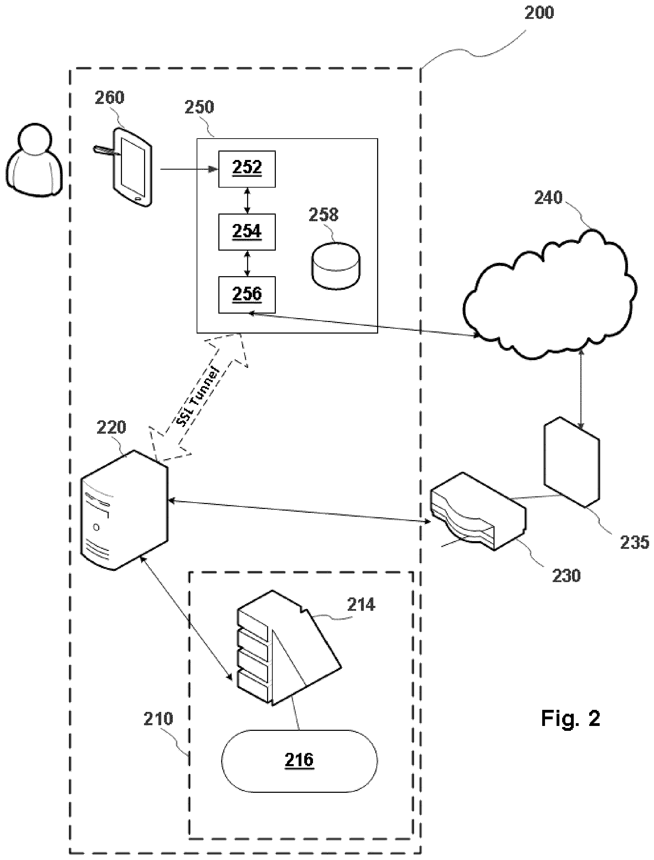

Figure 2 illustrates a block diagram of a water installation system according to an example. Water installation system 200 comprises a water installation configuration 210, a water installation controlling apparatus 220, a remote server 250 and a user device 260. The water installation configuration may comprise a water installation 216 and one or more water installation devices 214. The water installation controlling apparatus 220 may be similar to the one described with reference to Figure 1.

The water installation controlling apparatus 220 and the remote server 250 may be connected between them through an SSL tunnel connection that may be implemented through a communication network 240 such as the internet. A router 230 may provide access to the communication network 240 for the water installation controlling apparatus 220. The router may be protected by a firewall 235. A user may use a user device 260 to connect to the remote server 250 and control the water installation 210.

A secure tunnel may allow controlling remotely the water installation controlling apparatus, for any purposes such as for programming, updating and for maintenance of the apparatus.

The user device 260 may execute an application (app) that displays a graphical interface where the user may interact with displayed control elements. The user may interact in a form to control elements displayed on the user device that provoke the generation of control signals in the form of commands at the devices associated with the pool, spa or similar.

The commands involving actions to be taken by or on the devices associated with the water installation (pool, spa etc.) need to first pass by a remote server 250. This transmission of information between the user device 260 and the remote server 250 may be done for example via a global communications network such as the Internet in https packets (SSL encryption). Typically, this server may be arranged remote from the installation of the water installation and may be able to control simultaneously several facilities.

The remote server 250 may comprise an app server 252, a web server 254, an SSL tunneling module 256, and a database 258. The app server 252 (e.g. Tomcat) may have the functions of e.g. receiving commands from the user device 260, providing a login page to the entire system, providing information relevant to the association between users and water installation devices, etc. The web server 254 (e.g. Apache™) may be in charge of e.g. controlling the port forwarding and the communications that arrive from the water installation controlling apparatus 220. The SSL tunneling module 256 may have the function of maintaining the SSL tunnel with the water installation controlling apparatus 220. The database 258 may store data required by the app server 252, web server 254, and SSL tunneling module 256.

In the configuration of Figure 2, functionalities associated with the creation of controller modules may be provided locally, i.e. at the vicinity of the water installation controlling apparatus 220 through e.g. a panel associated with the controlling apparatus 220. The water installation controlling apparatus 220 may comprise software configured to provide said functionalities for creating controller modules. For example, this software may be configured to display on the panel necessary data related with said functionalities. Examples of functionalities for creating controller modules may be functionalities of data entry (by a user), functionalities of maintenance of DBs or descriptor files containing predefined control instructions, etc.

The configuration of Figure 2 may also permit performing the above functionalities (for creating controller modules) remotely from the user device 260 through corresponding services provided by the server 250. For example, the server 250 may comprise software providing data entry functionalities in such a way that necessary data for creating controller modules may be provided by a user from the user device 260. This remote software may also be configured to execute a suitable user interface for data entry from the user device 260.

The platform depicted in Figure 2 may also permit the updating of DBs and/or descriptor files containing predefined control instructions with new releases of the DBs and/or descriptor files, which may be downloaded via e.g. the SSL Tunnel or another connection suitably established between the controlling apparatus 220 and the server 250. This updating may be selectively performed in such a way that only obsolete versions of the DBs and/or descriptor files are replaced by corresponding new versions. Alternatively, this updating may be massive in such a way that all the DBs and/or descriptor files stored in the controlling apparatus 220 are replaced irrespective of whether a DB and/or descriptor file is obsolete or not. A selective updating of DBs and/or descriptor files may be based on e.g. user requests and/or an "intelligent" process based on e.g. timestamps comprised in the versions of the DBs and/or descriptor files.

The server 250 may provide access to a website of the manufacturer of the water installation devices 214, so that functionalities for creating controller modules may be performed through said website from the user device 260. In this sense, an implementation of a user interface for data entry may be stored at another site (e.g. at another server or at the water installation controlling apparatus). The server 250 may then remotely process said implementation of the user interface as part of an overall process of creating a controller module. This user interface for data entry may be configured to be embedded in a webpage so that the user interface may be processed as an "integral" part of e.g. the manufacturer's website.

Although only a number of particular examples have been disclosed herein, it will be understood by those skilled in the art that other alternative examples and/or uses and obvious modifications and equivalents thereof are possible. Furthermore, the disclosure covers all possible combinations of the particular examples described. Thus, the scope of the disclosure should not be limited by particular examples.

Further, although the examples described with reference to the drawings comprise computing apparatus/systems and processes performed in computing apparatus/systems, the disclosure also extends to computer programs, particularly computer programs on or in a carrier, adapted for putting the system into practice.

## Claims

1. A method of creating a controller module configured to be used by a water installation controlling apparatus (100; 220) to control a water installation device (214) which is connectable with the water installation controlling apparatus (100; 220) and which is not compatible with a control protocol used by the water installation controlling apparatus (100; 220), the method comprising
obtaining, by the water installation controlling apparatus (100; 220), from a user input, at least a predefined type of the water installation device (214);
obtaining, by the water installation controlling apparatus (100; 220), from a repository of control instructions, a set of control instructions associated with the predefined type, **characterised in that**
the set of control instructions comprises one or more output control instructions configured to be called by the water installation controlling apparatus (100; 220) according to the control protocol, and to be executed for operating the water installation device (214) as required by the control protocol, said control instructions thereby providing an interpreter function between the water installation controlling apparatus (100; 220) and the non-compatible water installation device (214);
creating, by the water installation controlling apparatus (100; 220), the controller module as an interpreter including the obtained set of control instructions.

2. A method according to claim 1, wherein the water installation device (214) is a non-programmable device.

3. A method according to any of claims 1 or 2, further comprising
obtaining, by the water installation controlling apparatus (100; 220), from the user input, an identifier of the water installation device (214); and
including, by the water installation controlling apparatus (100; 220), the identifier of the water installation device (214) in the controller module.

4. A method according to any of claims 1 to 3, further comprising
obtaining, by the water installation controlling apparatus (100; 220), from the user input, a pointer pointing at a first intermediary module through which the water installation device (214) is to be operated by the execution of the output control instructions; and
including, by the water installation controlling apparatus (100; 220), the pointer pointing at the first intermediary module in the controller module.

5. A method according to claim 4, wherein the first intermediary module is not compatible with the control protocol.

6. A method according to claim 4, wherein the first intermediary module is compatible with the control protocol.

7. A method according to any of claims 1 to 6, wherein
the set of control instructions further comprises one or more input control instructions configured to be called by the water installation controlling apparatus (100; 220), according to the control protocol, and to be executed for receiving a response from the non-compatible water installation device (214) and to transform the received response according to the control protocol.

8. A method according to claim 7, further comprising
obtaining, by the water installation controlling apparatus (100; 220), from the user input, a pointer pointing at a second intermediary module through which the response from the water installation device (214) is to be received; and
including, by the water installation controlling apparatus (100; 220), the pointer pointing at the second intermediary module in the controller module.

9. A method according to claim 8, wherein the second intermediary module is not compatible with the control protocol.

10. A method according to claim 8, wherein the second intermediary module is compatible with the control protocol.

11. A method according to any of claims 7 to 10, wherein
the one or more output control instructions comprise one or more first trigger instructions configured to cause activation or deactivation of the non-compatible water installation device (214) depending on a received response of another control protocol non-compatible water installation device (214).

12. A method according to any of claims 7 to 11, wherein
the one or more output control instructions comprise one or more second trigger instructions configured to cause activation or deactivation of the water installation device (214) depending on a status of a control protocol compatible water installation device (214).

13. A computer program product comprising program instructions for causing a computer to perform a method of creating a controller module according to any of claims 1 to 12.

14. A computer program product according to claim 13, embodied on a storage medium and/or carried on a carrier signal.

15. A system to create a controller module configured to be used by a water installation controlling apparatus (100; 220) to control a water installation device (214) which is connectable with the water installation controlling apparatus (100; 220) and which is not compatible with a control protocol used by the water installation controlling apparatus (100; 220), the system comprising
computing/electronic means for obtaining, by the water installation controlling apparatus (100; 220), from a user input, at least a predefined type of the water installation device (214);
computing/electronic means for obtaining, by the water installation controlling apparatus (100; 220), from a repository of control instructions, a set of control instructions associated with the predefined type, **characterised in that**
the set of control instructions comprises one or more output control instructions configured to be called by the water installation controlling apparatus (100; 220) according to the control protocol, and to be executed for operating the water installation device (214) as required by the control protocol, said control instructions thereby providing an interpreter function between the water installation controlling apparatus (100; 220) and the non-compatible water installation device (214);
computing/electronic means for creating, by the water installation controlling apparatus (100; 220), the controller module as an interpreter including the obtained set of control instructions.

## Patentansprüche

1. Ein Verfahren zur Erzeugung von einem Steuereinheitsmodul, das konfiguriert ist, um durch ein Wasserinstallationssteuergerät (100; 220) verwendet zu werden, um eine Wasserinstallationsvorrichtung (214) zu steuern, welche mit dem Wasserinstallationssteuergerät (100; 220) verbunden werden kann und welche mit einem durch das Wasserinstallationssteuergerät (100; 220) benutzten Steuerprotokoll nicht kompatibel ist, wobei das Verfahren folgendes umfasst
das Erhalten, durch das Wasserinstallationssteuergerät (100; 220), aus einer Benutzereingabe, von mindestens einer vorher definierten Art der Wasserinstallationsvorrichtung (214);
das Erhalten, durch das Wasserinstallationssteuergerät (100; 220), aus einem Depot von Steueranweisungen, von einer Reihe von Steueranweisungen, die in Zusammenhang mit der vorher definierten Art stehen, **dadurch gekennzeichnet, dass**
die Reihe von Steueranweisungen eine oder mehrere Ausgangssteueranweisungen umfasst, die konfiguriert ist bzw. sind, um durch das Wasserinstallationssteuergerät (100; 220) gemäß dem Steuerprotokoll aufgerufen zu werden und um ausgeführt zu werden, um die Wasserinstallationsvorrichtung (214) entsprechend den Anforderungen des Steuerprotokolls zu betreiben, wobei die Steueranweisungen dadurch eine Interpreterfunktion zwischen dem Wasserinstallationssteuergerät (100; 220) und der nicht kompatiblen Wasserinstallationsvorrichtung (214) bereitstellen;
das Erzeugen, durch das Wasserinstallationssteuergerät (100; 220), von dem Steuereinheitsmodul als Interpreter einschließlich der erhaltenen Reihe von Steueranweisungen.

2. Ein Verfahren nach Anspruch 1, wobei die Wasserinstallationsvorrichtung (214) eine nicht programmierbare Vorrichtung ist.

3. Ein Verfahren nach einem der Ansprüche 1 oder 2, weiterhin umfassend
das Erhalten, durch das Wasserinstallationssteuergerät (100; 220), von einem Bezeichner der Wasserinstallationsvorrichtung (214) aus der Benutzereingabe; und
das Einbeziehen, durch das Wasserinstallationssteuergerät (100; 220), von dem Bezeichner der Wasserinstallationsvorrichtung (214) in das Steuereinheitsmodul.

4. Ein Verfahren nach einem der Ansprüche 1 bis 3, weiterhin umfassend
das Erhalten, durch das Wasserinstallationssteuergerät (100; 220), von einem Zeiger aus der Benutzereingabe, der auf ein erstes Zwischenmodul zeigt, durch das die Wasserinstallationsvorrichtung (214) durch die Durchführung der Ausgangssteueranweisungen zu betreiben ist; und
das Einbeziehen, durch das Wasserinstallationssteuergerät (100; 220), von dem Zeiger, der auf das erste Zwischenmodul zeigt, in das Steuereinheitsmodul.

5. Ein Verfahren nach Anspruch 4, wobei das erste Zwischenmodul mit dem Steuerprotokoll nicht kompatibel ist.

6. Ein Verfahren nach Anspruch 4, wobei das erste Zwischenmodul mit dem Steuerprotokoll kompatibel ist.

7. Ein Verfahren nach einem der Ansprüche 1 bis 6, wobei
die Reihe von Steueranweisungen weiterhin eine oder mehrere Eingabesteueranweisungen umfasst, die konfiguriert ist bzw. sind, um durch das Wasserinstallationssteuergerät (100; 220) gemäß dem Steuerprotokoll aufgerufen zu werden und um zum Empfang von einer Antwort aus der nicht kompatiblen Wasserinstallationsvorrichtung (214) ausgeführt zu werden und die empfangene Antwort gemäß dem Steuerprotokoll umzuwandeln.

8. Ein Verfahren nach Anspruch 7, weiterhin umfassend:
das Erhalten, durch das Wasserinstallationssteuergerät (100; 220), von einem Zeiger aus der Benutzereingabe, der auf ein zweites Zwischenmodul zeigt, durch das die Antwort aus der Wasserinstallationsvorrichtung (214) zu empfangen ist; und
das Einbeziehen, durch das Wasserinstallationssteuergerät (100; 220), von dem Zeiger, der auf das zweite Zwischenmodul zeigt, in das Steuereinheitsmodul.

9. Ein Verfahren nach Anspruch 8, wobei das zweite Zwischenmodul mit dem Steuerprotokoll nicht kompatibel ist.

10. Ein Verfahren nach Anspruch 8, wobei das zweite Zwischenmodul mit dem Steuerprotokoll kompatibel ist.

11. Ein Verfahren nach einem der Ansprüche 7 bis 10, wobei
die eine oder die mehreren Ausgangssteueranweisungen eine oder mehrere erste Triggeranweisungen umfassen, die konfiguriert ist bzw. sind, um die Aktivierung oder Deaktivierung der nicht kompatiblen Wasserinstallationsvorrichtung (214) in Abhängigkeit von einer empfangenen Antwort von einer anderen mit dem Steuerprotokoll nicht kompatiblen Wasserinstallationsvorrichtung (214) hervorzubringen.

12. Ein Verfahren nach einem der Ansprüche 7 bis 11, wobei
die eine oder die mehreren Ausgangssteueranweisungen eine oder mehrere zweite Triggeranweisungen umfassen, die konfiguriert ist bzw. sind, um die Aktivierung oder Deaktivierung der Wasserinstallationsvorrichtung (214) in Abhängigkeit von einem Status von einer mit dem Steuerprotokoll kompatiblen Wasserinstallationsvorrichtung (214) hervorzubringen.

13. Ein Computerprogrammprodukt umfassend Programmanweisungen, um einen Computer dazu zu bringen, ein Verfahren zur Erzeugung von einem Steuereinheitsmodul nach einem der Ansprüche 1 bis 12 durchzuführen.

14. Ein Computerprogrammprodukt nach Anspruch 13, das in einem Speichermedium enthalten ist und/oder in einem Trägersignal getragen ist.

15. Ein System zur Erzeugung von einem Steuereinheitsmodul, das konfiguriert ist, um durch ein Wasserinstallationssteuergerät (100; 220) verwendet zu werden, um eine Wasserinstallationsvorrichtung (214) zu steuern, welche mit dem Wasserinstallationssteuergerät (100; 220) verbunden werden kann und welche mit einem durch das Wasserinstallationssteuergerät (100; 220) benutzten Steuerprotokoll nicht kompatibel ist, wobei das System folgendes umfasst
ein Computermittel/ein elektronisches Mittel zum Erhalten, durch das Wasserinstallationssteuergerät (100; 220), von mindestens einer vorher definierten Art der Wasserinstallationsvorrichtung (214) aus einer Benutzereingabe;
ein Computermittel/ein elektronisches Mittel zum Erhalten von einer Reihe von Steueranweisungen, die im Zusammenhang mit der vorher definierten Art stehen aus einem Depot von Steueranweisungen durch das Wasserinstallationssteuergerät (100; 220), **dadurch gekennzeichnet, dass**
die Reihe von Steueranweisungen eine oder mehrere Ausgangssteueranweisungen umfasst, die konfiguriert ist bzw. sind, um durch das Wasserinstallationssteuergerät (100; 220) gemäß dem Steuerprotokoll aufgerufen zu werden und um ausgeführt zu werden, um die Wasserinstallationsvorrichtung (214) entsprechend den Anforderungen des Steuerprotokolls zu betreiben, wobei die Steueranweisungen dadurch eine Interpreterfunktion zwischen dem Wasserinstallationssteuergerät (100; 220) und der nicht kompatiblen Wasserinstallationsvorrichtung (214) bereitstellen;
ein Computermittel/ein elektronisches Mittel zur Erzeugung, durch das Wasserinstallationssteuergerät (100; 220), des Steuereinheitsmoduls als Interpreter einschließlich der erhaltenen Reihe von Steueranweisungen.

## Revendications

1. Un procédé de création d'un module de contrôleur configuré pour être utilisé par un appareil de contrôle d'installation d'eau (100 ; 220) pour contrôler un dispositif d'installation d'eau (214) qui peut être relié à l'appareil de contrôle d'installation d'eau (100 ; 220) et qui n'est pas compatible avec un protocole de contrôle utilisé par l'appareil de contrôle d'installation d'eau (100 ; 220), le procédé comprenant
obtenir, par l'appareil de contrôle d'installation d'eau (100; 220), à partir d'une entrée utilisateur, au moins un type prédéfini du dispositif d'installation d'eau (214) ;
obtenir, par l'appareil de contrôle d'installation d'eau (100 ; 220), à partir d'un dépôt d'instructions de contrôle, une série d'instructions de contrôle liées au type prédéfini, **caractérisé en ce que**
la série d'instructions de contrôle comprend une ou plusieurs instructions de contrôle de sortie configurée(s) pour être appelée(s) par l'appareil de contrôle d'installation d'eau (100 ; 200) selon le protocole de contrôle, et pour être exécutée(s) pour le fonctionnement du dispositif d'installation d'eau (214) tel que requis par le protocole de contrôle, lesdites instructions de contrôle fournissant donc une fonction d'interprétateur entre l'appareil de contrôle d'installation d'eau (100 ; 220) et le dispositif d'installation d'eau non compatible (214) ;
créer, par l'appareil de contrôle d'installation d'eau (100 ; 200), le module de contrôleur comme un interprétateur incluant la série obtenue d'instructions de contrôle.

2. Un procédé selon la revendication 1, dans lequel le dispositif d'installation d'eau (214) est un dispositif non programmable.

3. Un procédé selon l'une quelconque des revendications 1 - 2, comprenant en outre :
obtenir, par l'appareil de contrôle d'installation d'eau (100; 220), à partir de l'entrée utilisateur, un identificateur du dispositif d'installation d'eau (214) ;
inclure, par l'appareil de contrôle d'installation d'eau (100; 220), l'identificateur du dispositif d'installation d'eau (214) dans le module de contrôleur.

4. Un procédé selon l'une quelconque des revendications 1 à 3, comprenant en outre :
obtenir, par l'appareil de contrôle d'installation d'eau (100 ; 220), à partir de l'entrée utilisateur, un pointeur qui montre un premier module intermédiaire à travers lequel le dispositif d'installation d'eau (214) doit être commandé moyennant l'exécution des instructions de contrôle de sortie ; et
inclure, par l'appareil de contrôle d'installation d'eau (100; 220), le pointeur qui montre le premier module intermédiaire dans le module de contrôleur.

5. Un procédé selon la revendication 4, dans lequel le premier module intermédiaire n'est pas compatible avec le protocole de contrôle.

6. Un procédé selon la revendication 4, dans lequel le premier module intermédiaire est compatible avec le protocole de contrôle.

7. Un procédé selon l'une quelconque des revendications 1 à 6, dans lequel
la série d'instructions de contrôle comprend en outre une ou plusieurs instructions de contrôle d'entrée configurée(s) pour être appelée(s) par l'appareil de contrôle d'installation d'eau (100 ; 200), conformément au protocole de contrôle, et pour être exécutée(s) pour recevoir une réponse du dispositif d'installation d'eau (214) non compatible et pour transformer la réponse reçue conformément au protocole de contrôle.

8. Un procédé selon la revendication 7, comprenant en outre :
obtenir, par l'appareil de contrôle d'installation d'eau (100 ; 220), à partir de l'entrée utilisateur, un pointeur qui montre un second module intermédiaire à travers lequel la réponse du dispositif d'installation d'eau (214) doit être reçue ; et
inclure, par l'appareil de contrôle d'installation d'eau (100; 220), le pointeur qui montre le second module intermédiaire dans le module de contrôleur.

9. Un procédé selon la revendication 8, dans lequel le second module intermédiaire n'est pas compatible avec le protocole de contrôle.

10. Un procédé selon la revendication 8, dans lequel le second module intermédiaire est compatible avec le protocole de contrôle.

11. Un procédé selon l'une quelconque des revendications 7 à 10, dans lequel
l'une ou les plusieurs instructions de contrôle de sortie comprennent une ou plusieurs instructions de déclenchement premières configurée(s) pour entraîner l'activation ou la désactivation du dispositif d'installation d'eau (214) non compatible en fonction d'une réponse reçue d'un autre dispositif d'installation d'eau (214) non compatible avec le protocole de contrôle.

12. Un procédé selon l'une quelconque des revendications 7 à 11, dans lequel
l'une ou les plusieurs instructions de contrôle de sortie comprennent une ou plusieurs instructions de déclenchement secondes configurée(s) pour entraîner l'activation ou la désactivation du dispositif d'installation d'eau (214) en fonction d'un état d'un dispositif d'installation d'eau (214) compatible avec le protocole de contrôle.

13. Un produit de programme informatique comprenant des instructions de programme pour entraîner l'exécution par un ordinateur d'un procédé de création d'un module de contrôleur selon l'une quelconque des revendications 1 à 12.

14. Un produit de programme informatique selon la revendication 13, incorporé dans un support de stockage et/ou porté dans un signal porteur.

15. Un système de création d'un module de contrôleur configuré pour être utilisé par un appareil de contrôle d'installation d'eau (100 ; 220) pour contrôler un dispositif d'installation d'eau (214) qui peut être relié à l'appareil de contrôle d'installation d'eau (100 ; 220) et qui n'est pas compatible avec un protocole de contrôle utilisé par l'appareil de contrôle d'installation d'eau (100 ; 220), le système comprenant
un moyen de calcul/électronique pour obtenir, par l'appareil de contrôle d'installation d'eau (100; 220), à partir d'une entrée utilisateur, au moins un type prédéfini du dispositif d'installation d'eau (214) ;
un moyen de calcul/électronique pour obtenir, par l'appareil de contrôle d'installation d'eau (100 ; 220), à partir d'un dépôt d'instructions de contrôle, une série d'instructions de contrôle liées au type prédéfini, **caractérisé en ce que**
la série d'instructions de contrôle comprend une ou plusieurs instructions de contrôle de sortie configurée(s) pour être appelée(s) par l'appareil de contrôle d'installation d'eau (100 ; 200) selon le protocole de contrôle, et pour être exécutée(s) pour le fonctionnement du dispositif d'installation d'eau (214) tel que requis par le protocole de contrôle, lesdites instructions de contrôle fournissant donc une fonction d'interprétateur entre l'appareil de contrôle d'installation d'eau (100 ; 220) et le dispositif d'installation d'eau non compatible (214) ;
un moyen de calcul/électronique pour créer, par l'appareil de contrôle d'installation d'eau (100 ; 200), le module de contrôleur comme un interprétateur incluant la série obtenue d'instructions de contrôle.
